(19) Europäisches Patentamt
European Patent Office
Office européen des brevets

(11) **EP 4 563 996 A1**

(12) **DEMANDE DE BREVET EUROPEEN**

(43) Date de publication:
**04.06.2025 Bulletin 2025/23**

(21) Numéro de dépôt: **24212414.7**

(22) Date de dépôt: **12.11.2024**

(51) Classification Internationale des Brevets (IPC):
**G01N 29/04** (2006.01)  **G01N 29/06** (2006.01)
**G01N 29/11** (2006.01)  **G01N 29/26** (2006.01)
**G01N 29/30** (2006.01)  **G01S 7/52** (2006.01)

(52) Classification Coopérative des Brevets (CPC):
**G01N 29/043; G01N 29/0654; G01N 29/11;**
**G01N 29/262; G01N 29/30; G01S 7/52049;**
G01N 2291/044; G01N 2291/106

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH MA MD TN**

(30) Priorité: **30.11.2023 FR 2313317**

(71) Demandeur: **Commissariat à l'Energie Atomique et aux Energies Alternatives**
**75015 Paris (FR)**

(72) Inventeurs:
• **ROUE, David**
**91191 Gif-sur-Yvette Cedex (FR)**
• **IAKOVLEVA, Ekaterina**
**91191 Gif-sur-Yvette Cedex (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE CALIBRATION AUTOMATIQUE D'UN TRANSDUCTEUR ULTRASONORE**

(57) Procédé, mis en oeuvre par ordinateur, de calibration de signaux ultrasonores acquis par un transducteur ultrasonore multi-éléments pour imager une zone d'intérêt, la méthode comprenant les étapes de :
Estimer (601) un champ ultrasonore émis depuis le transducteur vers un point P quelconque de ladite zone,
Estimer (601) un champ ultrasonore acquis par le transducteur en provenance dudit point P,
Déterminer (602) un signal élémentaire reçu par le transducteur à partir du champ ultrasonore émis et du champ ultrasonore acquis,
Déterminer (603) à partir dudit signal élémentaire, pour chaque point P de ladite zone, un coefficient de calibration à appliquer aux signaux reçus par un transducteur ultrasonore pour imager ladite zone ou à une image ultrasonore obtenue à partir desdits signaux reçus.

FIG.6

**Description**

L'invention concerne le domaine du contrôle non destructif par ultrasons qui vise à réaliser une imagerie ou une échographie d'une pièce à inspecter, au moyen d'un transducteur à ultrasons multi-éléments.

L'invention porte plus précisément sur une méthode de calibration automatisée en amplitude d'un tel transducteur en préalable à son utilisation.

Un objectif général du contrôle non destructif est d'imager une pièce afin d'identifier des défauts à l'intérieur de cette pièce. Les défauts correspondent à des réflecteurs sur lesquels les ondes sont réfléchies puis rétro-propagées jusqu'au transducteur qui les mesurent.

Ce processus implique que le contrôle non destructif par ultrasons d'une pièce est basé sur des mesures relatives. En effet, l'amplitude mesurée présente une atténuation fonction de la distance entre un réflecteur à l'intérieur de la pièce et l'élément émetteur du transducteur. Cette atténuation doit être corrigée car l'objectif est de caractériser les réflecteurs indépendamment de leur distance au transducteur.

Il est donc nécessaire de mettre en place une procédure de calibration afin d'assurer que tous les réflecteurs potentiels d'une pièce entraînent une amplitude uniforme sur les signaux reçus quelle que soit la profondeur du réflecteur. Pour cela, le dispositif de contrôle doit être calibré sur des mesures de référence avant de pouvoir réaliser une inspection d'une nouvelle pièce.

Les méthodes de calibration de l'état de l'art sont basées sur la génération de courbes de correction des amplitudes du signal en fonction du temps pour chaque élément d'un transducteur et chaque angle d'incidence du signal émis. Ces courbes sont obtenues à partir de mesures réalisées sur une pièce de référence comprenant des réflecteurs artificiels situés à des endroits prédéfinis de la pièce, à différentes profondeurs. Les mesures nécessitent le positionnement du transducteur par rapport à la pièce selon différentes positions et orientations afin d'obtenir des courbes de calibration complètes. Elles impliquent donc l'intervention d'un opérateur humain qui doit réaliser plusieurs mesures successives en repositionnant à chaque fois le transducteur vis-à-vis de la pièce de référence. Les courbes de correction des amplitudes du signal sont déterminées en fonction du temps de sorte que les réflecteurs de dimension égale donnent des réponses en amplitude uniformes pour toutes les profondeurs et positions de ces réflecteurs.

Cette méthode présente l'inconvénient d'être délicate et longue à réaliser et de nécessiter l'intervention d'un opérateur humain. En conséquence, la précision des courbes de calibration obtenues dépend de la précision du placement du transducteur par l'opérateur. Par ailleurs les courbes obtenues nécessitent une interpolation pour obtenir toutes les valeurs de gain en fonction de la profondeur puisque le nombre de réflecteurs dans la pièce de référence est limité.

Il existe donc un besoin pour une méthode de calibration automatisée qui soit simple et rapide à mettre en oeuvre, qui ne nécessite pas l'intervention d'un opérateur humain et qui soit plus précise.

L'invention propose une nouvelle méthode de calibration automatique qui est basée sur la détermination d'une cartographie de correction calculée pour tout point d'une zone à imager à partir d'un modèle de champ ultrasonore. Elle ne nécessite ainsi pas l'intervention d'un opérateur ni de mesures préalables. L'invention présente ainsi l'avantage d'améliorer la précision et la rapidité de l'étape de calibration. Elle est compatible de plusieurs méthodes d'imagerie ultrasonores, notamment les méthodes d'acquisition TFM (Total Focusing Method) et PWI (Plane Wave Imaging).

L'invention a pour objet un procédé, mis en oeuvre par ordinateur, de calibration de signaux ultrasonores acquis par un transducteur ultrasonore multi-éléments pour imager une zone d'intérêt, la méthode comprenant les étapes de :

- Estimer un champ ultrasonore émis depuis le transducteur vers un point P quelconque de ladite zone,

- Estimer un champ ultrasonore acquis par le transducteur en provenance dudit point P,

- Déterminer un signal élémentaire reçu par le transducteur à partir du champ ultrasonore émis et du champ ultrasonore acquis,

- Déterminer à partir dudit signal élémentaire, pour chaque point P de ladite zone, un coefficient de calibration à appliquer aux signaux reçus par un transducteur ultrasonore pour imager ladite zone ou à une image ultrasonore obtenue à partir desdits signaux reçus.

Selon une variante de réalisation, le procédé selon l'invention comprend en outre les étapes de :

- Réaliser une imagerie ultrasonore de la zone d'intérêt au moyen du transducteur ultrasonore,

- Corriger les signaux reçus par le transducteur ultrasonore ou l'image déterminée à partir desdits signaux au moyen des coefficients de calibration calculés.

Selon un aspect particulier de l'invention, les étapes d'estimer un champ ultrasonore comprennent la projection du champ ultrasonore estimé sur un vecteur de polarisation de l'onde ultrasonore.

Selon un aspect particulier de l'invention,

- le signal élémentaire associé à un couple d'éléments (émetteur, récepteur) du transducteur est pris égal au produit de convolution temporel entre le champ ultrasonore émis depuis l'élément émetteur vers le point P et le champ ultrasonore acquis par l'élément récepteur en provenance du point P,

- Le coefficient de calibration est pris égal à la somme, sur l'ensemble des éléments du transducteur, des valeurs du signal élémentaire prises à des instants égaux à la somme entre le temps de parcours d'une onde ultrasonore entre un élément émetteur du transducteur et le point P et le temps de parcours d'une onde ultrasonore entre le point P et un élément récepteur du transducteur,

- Le coefficient de calibration étant appliqué au pixel, correspondant au point P, d'une image ultrasonore obtenue via une méthode de focalisation totale.

Selon un aspect particulier de l'invention, le transducteur ultrasonore est apte à émettre une onde plane selon un angle d'incidence donné et le champ ultrasonore émis par le transducteur selon l'angle d'incidence vers le point P est pris égal à la somme des valeurs des champs ultrasonores émis depuis un élément du transducteur vers le point P, prises à un instant retardé d'un retard prédéfini de sorte que le transducteur émette une onde plane avec ledit angle d'incidence.

Selon un aspect particulier de l'invention,

- Le signal élémentaire associé à un couple (angle d'incidence, élément récepteur du transducteur) est pris égal au produit de convolution temporel entre le champ ultrasonore émis par le transducteur selon l'angle d'incidence vers le point P et le champ ultrasonore acquis par l'élément récepteur en provenance du point P,

- Le coefficient de calibration est pris égal à la somme, sur une pluralité d'angles d'incidence et l'ensemble des éléments du transducteur, des valeurs du signal élémentaire prises à des instants égaux à la somme entre le temps de parcours d'une onde plane émise avec un angle d'incidence donné vers le point P et le temps de parcours d'une onde ultrasonore entre le point P et un élément récepteur du transducteur,

- Le coefficient de calibration étant appliqué au pixel, correspondant au point P, d'une image ultrasonore obtenue via une méthode d'imagerie ultrasonore par onde plane.

Selon un aspect particulier de l'invention, l'image ultrasonore est une somme des signaux acquis par les éléments du transducteur pris aux temps de vol correspondants à un point P de la zone à imager.

Selon un aspect particulier de l'invention,

- Le signal élémentaire associé à un angle d'incidence est pris égal au produit de convolution temporel entre le champ ultrasonore émis par le transducteur selon l'angle d'incidence vers un point situé sur un rayon représentatif de la propagation de l'onde plane et le champ ultrasonore émis depuis ledit point vers le transducteur,

- Chaque signal ultrasonore acquis par le transducteur pour un angle d'incidence et un temps de vol donnés est corrigé par le coefficient de calibration pris égal au signal élémentaire pris à un instant égal au temps de vol.

Selon un aspect particulier de l'invention, l'image ultrasonore est définie par une représentation des signaux acquis en fonction de l'angle d'incidence et du temps de vol.

L'invention a aussi pour objet un dispositif d'imagerie ultrasonore comprenant un transducteur ultrasonore multi-éléments et une unité de traitement configurés pour mettre en oeuvre les étapes du procédé de calibration selon l'invention.

L'invention a aussi pour objet un programme d'ordinateur comprenant des instructions qui conduisent le dispositif selon l'invention à exécuter les étapes du procédé de calibration selon l'invention.

D'autres caractéristiques et avantages de la présente invention apparaîtront mieux à la lecture de la description qui suit en relation aux dessins annexés suivants.

Fig. 1 représente, sur un organigramme, les étapes de mise en oeuvre d'une méthode de calibration appliquée à une première méthode d'acquisition de signaux ultrasonores, selon l'art antérieur,

Fig. 2 représente, sur un organigramme, les étapes de mise en oeuvre d'une seconde méthode de calibration appliquée à une méthode d'imagerie ultrasonore TFM ou PWI, selon l'art antérieur,

Fig. 3 montre un exemple d'interface d'un assistant de calibration selon l'art antérieur,

Fig. 4a montre un premier exemple de courbes de calibration expérimentales obtenues selon la méthode de calibration de la figure 1 pour différentes orientations du transducteur,

Fig. 4b montre un second exemple de courbes de calibration expérimentales obtenues selon la méthode de calibration de la figure 1 pour différentes orientations du transducteur,

Fig. 5 représente, sur un organigramme, les étapes de mise en oeuvre d'une méthode de calibration automatisée appliquée à une imagerie TFM ou PWI selon un mode de réalisation de l'invention,

Fig. 6 représente, sur un organigramme, les étapes de mise en oeuvre de la méthode de calcul d'une cartographie de correction utilisée par la méthode de calibration de la figure 5,

Fig. 7 illustre l'application de la méthode selon l'invention pour une imagerie ultrasonore TFM,

Fig. 8 illustre un schéma d'une configuration d'imagerie ultrasonore par balayage angulaire,

Fig. 9 représente, sur un organigramme, les étapes de mise en oeuvre d'une méthode de calibration automatisée appliquée à une imagerie ultrasonore par balayage angulaire selon un mode de réalisation de l'invention,

Fig. 10 représente, sur un organigramme, les étapes de mise en oeuvre de la méthode de calcul des coefficients de calibration utilisés par la méthode de la figure 9,

Fig. 11 représente un schéma illustratif d'un rayon représentatif de la propagation d'une onde ultrasonore,

Fig. 12 représente un exemple de signaux corrigés au moyen de la méthode décrite aux figures 9 et 10,

Fig. 13 représente un schéma d'un système d'imagerie ultrasonore apte à mettre en oeuvre l'invention.

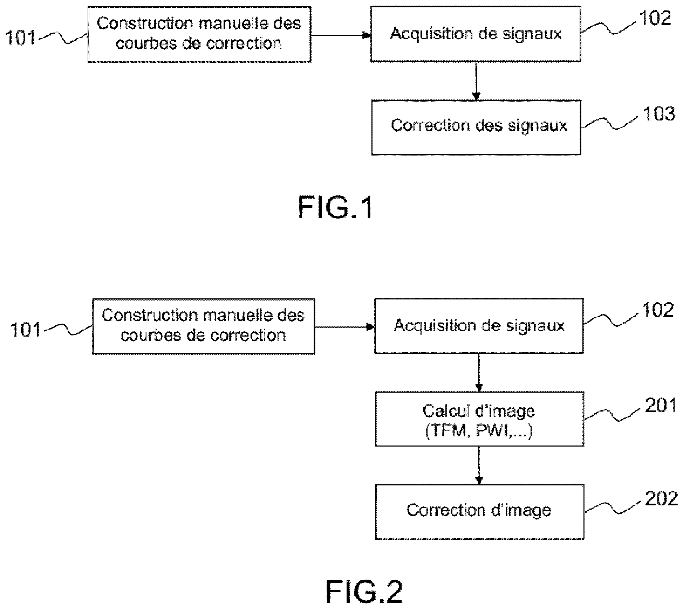

La figure 1 illustre une procédure de calibration d'un transducteur ultrasonore selon l'art antérieur appliquée à une acquisition de signaux ultrasonores.

Une méthode d'acquisition de signaux ultrasonores est basée sur l'utilisation d'un transducteur multi-éléments associé à une focalisation en émission et/ou en réception par application de lois de retards aux éléments du transducteur. Cette application peut nécessiter un balayage angulaire des signaux ultrasons et une focalisation en un ou plusieurs points. Une onde plane est générée par le transducteur selon un angle d'incidence en direction d'une pièce à inspecter. Cette onde est réfléchie sur des réflecteurs que comporte la pièce puis propagée vers le transducteur agissant en réception qui réalise une acquisition des signaux réfléchis.

Comme indiqué ci-dessus, les signaux acquis nécessitent une calibration en amplitude en fonction du temps de vol lié à la distance entre le transducteur et les réflecteurs dans la pièce.

Cette méthode de calibration comprend une première étape 101 de construction de courbes de corrections de gains pour différents angles d'émission des signaux ultrasonores. Lors d'une deuxième étape 102, des signaux ultrasonores sont mesurés par un transducteur pour contrôler une pièce. Les courbes de calibration sont ensuite utilisées pour corriger (étape 103) les signaux acquis en amplitude fonction du temps afin de s'assurer que tous les réflecteurs ont une amplitude uniforme selon la profondeur. Cette calibration est donc réalisée pour chacun des signaux reçus par le transducteur.

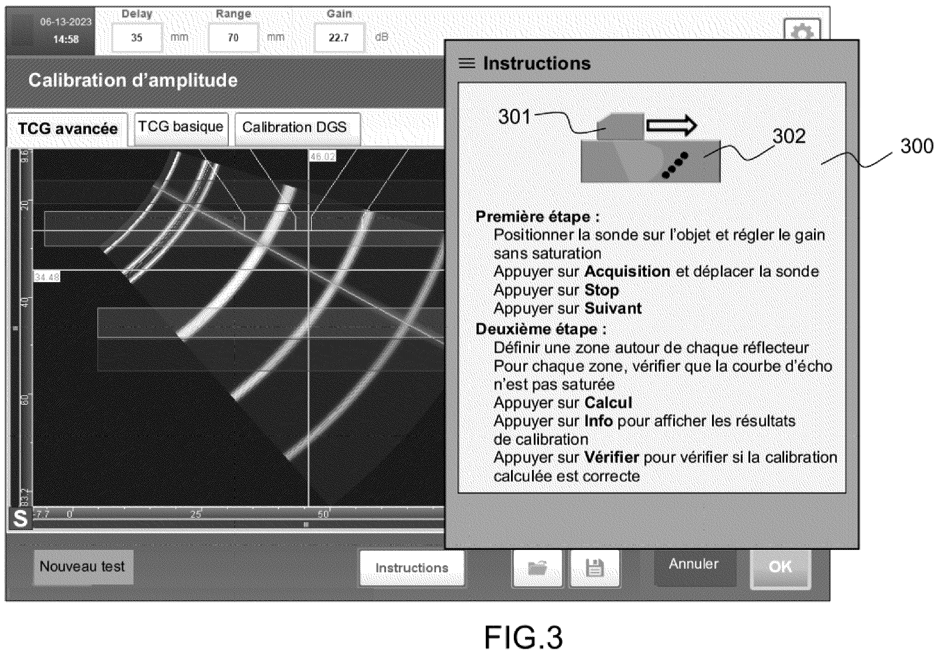

L'étape 101 de construction des courbes de correction de gains nécessite un protocole de mesures réalisées par un opérateur. A chaque étape du protocole, l'opérateur déplace le transducteur par rapport à une pièce de référence qui comporte des réflecteurs positionnés à différentes profondeurs. Pour cela, il peut être assisté par un assistant logiciel du type décrit à la figure 3.

Dans le cadre 300, des instructions à destination de l'opérateur sont affichées pour lui indiquer le protocole à suivre.

Ce protocole consiste à réaliser plusieurs acquisitions successives via un transducteur multi-éléments 301 positionné par rapport à une pièce de référence 302. La pièce de référence comporte des trous latéraux à différentes profondeurs et qui font office de réflecteurs pour les ondes ultrasonores émises par le transducteur.

A chaque étape, l'opérateur réalise une acquisition ultrasonore pour une position du transducteur et une orientation angulaire vis-à-vis de la pièce.

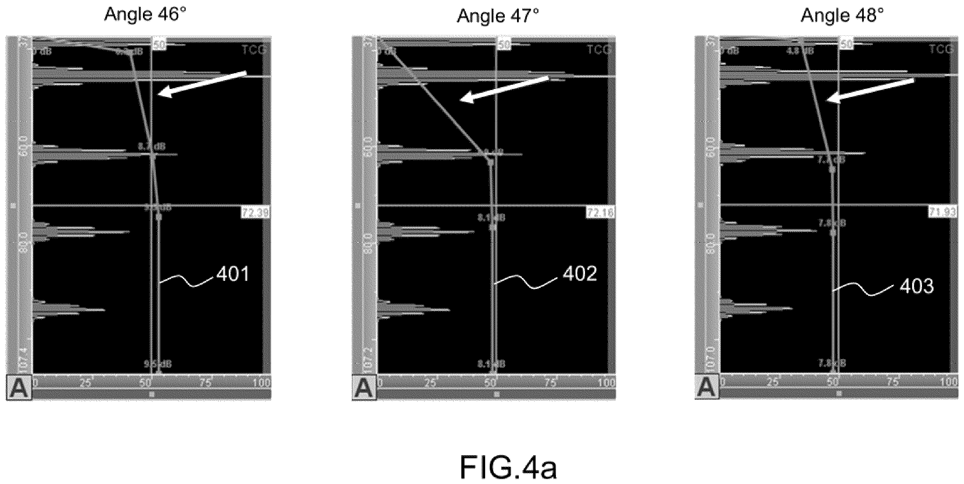

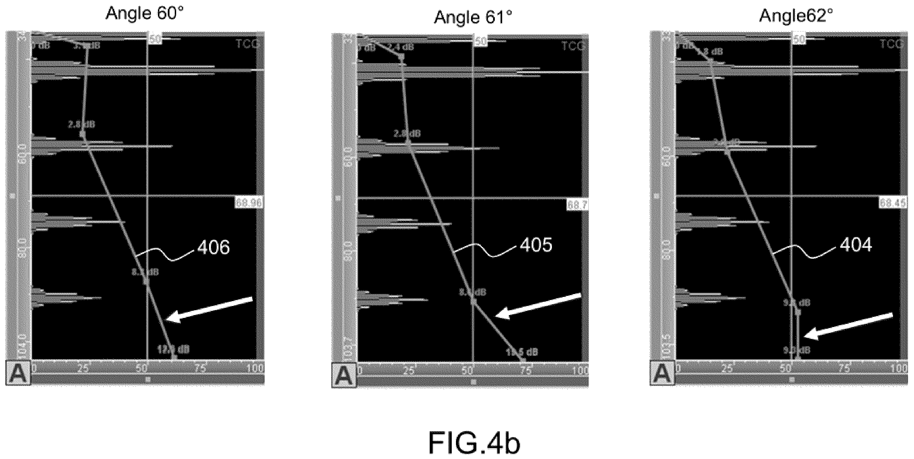

Les figure 4a et 4b montrent un exemple de plusieurs courbes de calibrations obtenues par ce protocole pour différents angles d'incidence de l'onde plane générée par le transducteur égaux respectivement à 46°, 47°, 48°, 60°, 61 ° et 62°.

Chaque diagramme des figures 4a et 4b représente en abscisse l'amplitude du signal et en ordonnée le temps de vol ou la distance entre l'émetteur et un réflecteur.

Les quatre pics d'amplitudes observés correspondent aux mesures résultants des réflexions des signaux ultrasonores sur quatre réflecteurs d'une pièce de référence. Les courbes 401-406 donnent le gain de calibration qui est calculé à partir de ces mesures.

Ces courbes sont ensuite utilisées pour calibrer de nouveaux signaux à l'étape 103 afin de corriger l'amplitude de chaque signal.

Cette procédure de correction peut aussi être appliquée directement à des images obtenues par imagerie TFM ou PWI comme illustré à la figure 2.

Dans ce cas, les images sont calculées à l'étape 201 à partir des signaux acquis à l'étape 102, puis elles sont corrigées directement à l'aide des courbes de correction à l'étape 202.

Les méthodes d'imagerie TFM ou PWI permettent de former une image par focalisation synthétique, en émission et réception, en tous points d'une zone d'intérêt. L'étape de correction 202 est appliquée sur chaque colonne de l'image afin d'avoir la même sensibilité pour chaque point de l'image.

Comme cela peut être vu aux figures 4a et 4b, les différentes courbes de correction de gain 401-406 ont des allures différentes pour des différences d'angles faibles (1°). Les variations de ces courbes ne sont pas linéaires et parfois brutales en fonction de la profondeur pour des angles très proches.

On peut ainsi voir que cette procédure de calibration manuelle entraine des résultats imprécis.

C'est pourquoi il est proposé une méthode de calibration automatisée qui ne nécessite pas de mesures sur une pièce de référence ni d'intervention d'un opérateur humain. La méthode de calibration proposée est basée sur une estimation du champ ultrasonore généré par le transducteur et du champ réfléchi en tous points d'une zone à imager. Elle peut s'appliquer à différents types de méthodes d'imagerie ultrasonore.

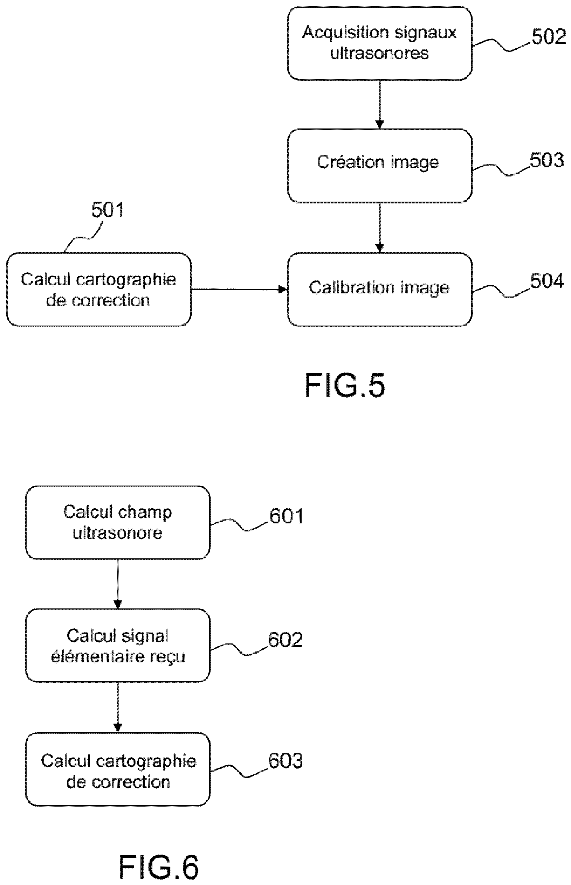

Les figures 5, 6 et 7 décrivent un premier mode de réalisation d'une méthode de calibration automatisée appliquée à une méthode d'imagerie ultrasonore TFM (Total Focusing Method).

La figure 5 décrit, sur un organigramme, les étapes relatives à la méthode d'imagerie intégrant une correction obtenue par calibration.

La figure 6 décrit, sur un autre organigramme, les étapes de mise en oeuvre de la méthode de détermination d'une cartographie de correction.

La méthode d'imagerie TFM (Total Focusing Method) s'applique principalement à des acquisitions ultrasonores de type Full Matrix Capture (FMC) telles que décrites dans la référence [1]. Pour un transducteur ultrasonore comprenant N éléments, l'acquisition FMC consiste à enregistrer un ensemble de NxN signaux élémentaires $s_{ij}(t)$, $i, j = 1, ... , N$. L'indice i dénote le numéro de l'élément émetteur et l'indice j celui de l'élément récepteur.

L'algorithme d'imagerie TFM consiste à sommer de manière cohérente les signaux reçus pour obtenir des interférences constructives, et ainsi des maxima d'amplitude, à l'endroit où sont effectivement localisés les défauts à l'origine des échos détectés. Il s'appuie principalement sur l'exploitation des temps de vol évalués théoriquement à partir de modèles directs. Cet algorithme peut se résumer ensuite en trois étapes :

- Définition d'une zone de reconstruction à imager dans une pièce donnée (position, dimensions et nombre de points) ;
- Pour chaque point p de l'image et pour chaque couple émetteur-récepteur ij, calcul du temps de vol théorique, $t_{ij}(p) = t_i(p) + t_j(p)$, où $t_i(p)$ correspond au temps de parcours de l'onde ultrasonore entre l'émetteur i et le point p et $t_j(p)$ correspond au temps parcours de l'onde ultrasonore entre le récepteur j et le point p.
- Pour chaque point p de l'image, sommation des amplitudes extraites des signaux $s_{ij}(t)$ aux temps $t_i(p) + t_j(p)$, ce qui peut s'écrire :

$$I_{TFM}(p) = \sum_{i,j=1}^{N} s_{ij}\left(t_i(p) + t_j(p)\right) \#(1.1)$$

Ainsi, comme représenté à la figure 5, l'étape 502 consiste à réaliser une acquisition ultrasonore de type FMC à l'aide d'un transducteur multi-éléments positionné par rapport à une pièce à imager. Cette étape 502 conduit à l'acquisition des signaux élémentaires $s_{ij}(t)$, $i, j = 1, ... , N$.

A l'étape 503, on applique la méthode TFM pour construire l'image $I_{TFM}(p)$ comme indiqué ci-dessus.

Cette image est ensuite corrigée à l'étape 504 par un facteur de calibration sous la forme d'une cartographie de correction donnant, pour chaque pixel p de l'image, le facteur de correction C(p) à appliquer :

$$I_{TFM,corr}(p) = \frac{I_{TFM}(p)}{C(p)} \#(1.2)$$

La cartographie de correction C(p) est pré-calculée à l'étape 501 pour l'ensemble des pixels p correspondant à la zone à inspecter. Les valeurs de C(p) sont sauvegardées dans une mémoire ou une base de données qui est interrogée à l'étape 504 pour corriger l'image TFM.

La figure 6 illustre les étapes de calcul de la méthode de détermination de la cartographie de correction C(p).

La première étape 601 consiste à estimer le champ ultrasonore de déplacement transmis depuis un point et observé en un autre point.

On note $\mathbf{U}_i(p, t)$, le champ de déplacement transmis par l'élément ultrasonore i et observé au point p. Il peut s'écrire sous la forme suivante :

$$\mathbf{U}_i(p, t) = \mathbf{q}_i A_i(p) \delta\big(t - t_i(p)\big) e^{i\phi} \#(1.3)$$

où $A_i(p)$ est l'amplitude du vecteur de déplacement de l'onde au point p, $t_i(p)$ est le temps de vol de l'onde ultrasonore entre l'élément i et le point p, $\phi$ est la phase de l'onde et $\mathbf{q}_i$ est le vecteur de polarisation de l'onde. Ce vecteur est normé et représente la direction du déplacement des particules au passage de l'onde. Il dépend de la nature de l'onde (onde longitudinale ou onde transversale) et de sa direction de propagation. L'Homme du métier peut se référer au document [2] pour davantage de détails sur le calcul précis de ce champ de déplacement.

On note $U_i(p, t)$, la projection du champ $\mathbf{U}_i(p, t)$ sur sa polarisation $\mathbf{q}_i$ :

$$U_i(p, t) = \mathbf{U}_i(p, t) \cdot \mathbf{q}_i \#(1.4)$$

où l'operateur « · » représente le produit scalaire et $\mathbf{U}_i(p, t)$, le champ de déplacement transmis par l'élément i et observé au point p défini par la formule (1.3). Cette projection décrit la propagation de l'onde de l'élément i vers le point p.

De façon similaire, on note $U_j(p, t)$ le champ de déplacement de l'onde réfléchie depuis le point p et observée (acquise) par un élément ultrasonore d'indice j.

Les estimées des champs ultrasonores $U_i(p, t)$ et $U_j(p, t)$ peuvent être calculées au moyen d'un logiciel de simulation de propagation d'ondes élastodynamiques, par exemple le logiciel CIVA, décrit dans la publication [5].

En utilisant l'approche proposée dans la référence [3], on détermine, à l'étape 602, le signal élémentaire reçu par l'élément j avec une émission par l'élément i en présence d'un diffracteur supposé ponctuel en un point p de la pièce. Ce signal élémentaire peut être approximé comme le produit de convolution temporel des deux champs ultrasonores correspondant respectivement au trajet de l'onde entre l'élément i et le point p puis entre le point p et l'élément j.

$$\hat{s}_{ij}(p, t) = U_i(p, t) * U_j(p, t) \#(1.5)$$

où * représente le produit de convolution temporelle.

Enfin à l'étape 603, on détermine le gain de correction à appliquer à une image TFM pour chaque point p via la relation suivante :

$$C(p) = \sum_{i,j=1}^{N} \hat{s}_{ij}\big(p, t_i(p) + t_j(p)\big) \#(1.6)$$

où $t_i(p)$ est le temps de vol de l'onde entre l'émetteur i et le point p et $t_j(p)$ est le temps de vol de l'onde entre le récepteur j et le point p.

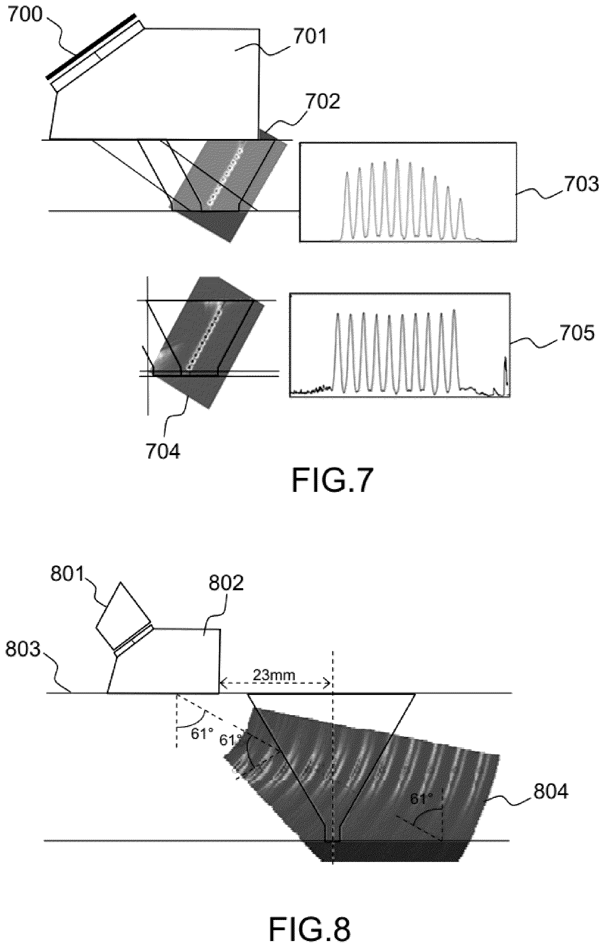

La figure 7 illustre un exemple de mise en oeuvre de la méthode de calibration selon ce premier mode de réalisation de l'invention.

La figure 7 représente schématiquement un transducteur multiéléments 700 positionné sur une pièce 701 à inspecter qui comporte des trous transversaux alignés positionnés à différentes profondeurs. L'image 702 correspond à une image TFM de la pièce non corrigée tandis que l'image 704 correspond à l'image corrigée à l'aide du gain de correction déterminé à l'étape 603. Les diagrammes 703 et 705 représentent l'intensité des pixels de l'image selon une ligne qui correspond à l'alignement des trous. On peut voir que sur le diagramme 703, les amplitudes sont atténuées à différents niveaux selon la distance du trou au transducteur. Sur le diagramme 705, après correction, ces signaux sont calibrés pour être à un pourcentage de hauteur plein écran sensiblement identique quelle que soit la distance du trou (réflecteur) au transducteur.

On décrit à présent un second mode de réalisation de l'invention appliqué à un autre type d'imagerie ultrasonore, l'imagerie PWI (Plane Wave Imaging) ou imagerie par ondes planes.

La méthode d'imagerie par ondes planes PWI s'applique à une acquisition ultrasonore réalisée avec des ondes planes en émission. L'algorithme PWI répète toutes les étapes de l'algorithme TFM, comme cela est décrit en détail dans la référence [4]. Pour un transducteur à N éléments et M ondes planes transmises dans le milieu, l'intensité de l'image PWI au point de calcul p s'écrit:

$$I_{PWI}(p) = \sum_{m=1}^{M} \sum_{j=1}^{N} s_{mj}\left(t_m^e(p) + t_j^r(p)\right) \#(2.1)$$

où $t_m^e(p)$ est le temps mis par la $m^e$ onde plane avec l'angle d'incidence $\theta_m$ pour atteindre le point de focalisation $p$, $t_j^r(p)$ est le temps de vol entre le point de focalisation et le récepteur $j$, $s_{mj}(t)$ est le signal reçu par l'élément $j$.

Les étapes de la méthode d'imagerie PWI corrigée sont similaires à celles de la méthode TFM décrite à la figure 5 bien que la mise en oeuvre de chaque étape est adaptée à la spécificité d'une imagerie par ondes planes.

Ainsi, à l'étape 501, on réalise une acquisition de signaux ultrasonores intégrant une émission d'ondes planes.

Chaque onde plane est définie par un angle d'incidence $\theta_m$ et est obtenue à partir de l'ensemble des éléments du transducteur qui sont excités avec des lois de retard à l'émission particulières.

Pour générer ces ondes planes, il convient au préalable de calculer des lois de retard à l'émission, pour chaque direction de propagation souhaitée, afin d'appliquer ces retards aux éléments du transducteur.

Pour un transducteur à N éléments et une onde plane définie par un angle d'incidence $\theta_m$, on note par :

$$\tau_i(\theta_m) = \tau_{im}, \quad i = 1, \dots, N, \quad m = 1, \dots, M \#(2.2)$$

le retard appliqué à l'émission à un élément d'indice i du transducteur, où M est le nombre d'ondes planes transmises par le traducteur.

Pour des applications courantes, les éléments du transducteur et la zone à inspecter sont séparés par une interface plane. Alors, pour calculer les lois de retard, il suffit d'émettre dans l'eau une onde plane dont l'angle d'incidence $\alpha$ vérifie la relation de Snell-Descartes ( $\dfrac{\sin \alpha}{c_1} = \dfrac{\sin \theta}{c_2}$ ) avec l'angle de réfraction désiré $\theta$. Dans ce cas, le retard appliqué (en émission et en réception) à un élément est donné par :

$$\tau_i(\theta) = (x_i \sin \alpha + z_i \cos \alpha)\frac{1}{c_1} - \min_{x_i, z_i}\left((x_i \sin \alpha + z_i \cos \alpha)\frac{1}{c_1}\right)\#(2.3)$$

où $c_1$ est la vitesse de propagation dans le milieu couplant situé entre le transducteur et la pièce à inspecter, $c_2$ est la vitesse de propagation dans la pièce inspectée et $(x_i, z_i)$ sont les coordonnées du centre de l'élément i.

On applique ensuite ces retards aux éléments du transducteur puis on réalise une acquisition de signaux ultrasonores $s_{mj}(t)$ où m correspond à l'indice de l'angle d'incidence associé à l'onde plane émise et j correspond à l'indice d'un élément du transducteur agissant en réception.

A l'étape 503, on crée une image PWI à partir des signaux acquis pour construire l'image $I_{PWI}(p)$ donnée par la relation 2.1.

Cette image est ensuite corrigée à l'étape 504 par un facteur de calibration sous la forme d'une cartographie de correction donnant, pour chaque pixel p de l'image, le facteur de correction C(p) à appliquer :

$$I_{PWI,corr}(p) = \frac{I_{PWI}(p)}{C(p)} \#(2.4)$$

La cartographie de correction C(p) est pré-calculée à l'étape 501 pour l'ensemble des pixels p correspondant à la zone à inspecter. Les valeurs de C(p) sont sauvegardées dans une mémoire ou une base de données qui est interrogée à l'étape 504 pour corriger l'image TFM.

Le calcul de la cartographie de correction suit des étapes similaires à celles développées pour la méthode TFM en référence à la figure 6.

A l'étape 601, on calcule le champ ultrasonore de déplacement transmis pour une onde plane émise avec un angle d'incidence $\theta$ et observé au point p.

La cartographie du champ ultrasonore est calculée en émission (et en réception si la configuration du transducteur n'est pas symétrique).

On note $\mathbf{U}_i(p, t)$, le champ de déplacement transmis par l'élément i du transducteur et observé au point p défini par la formule (1.4).

On définit par $\mathbf{k}(\theta)$ la direction de propagation et par $\mathbf{q}(\theta)$ la polarisation de l'onde plane se propageant avec un angle d'incidence $\theta$. Pour les ondes longitudinales, la polarisation $\mathbf{q}(\theta)$ est colinéaire à la direction de propagation $\mathbf{k}(\theta)$. Et pour les ondes transversales, la polarisation $\mathbf{q}(\theta)$ est orthogonale à la direction de propagation $\mathbf{k}(\theta)$.

On note $U_i(p, t)$, la projection du champ élémentaire $\mathbf{U}_i(p, t)$ sur l'axe de polarisation $\mathbf{q}(\theta)$ :

$$U_i(p, t) = \mathbf{U}_i(p, t) \cdot \mathbf{q}(\theta) \#(2.5)$$

où l'operateur « $\cdot$ » représente le produit scalaire.

Alors, le champ transmis pour un angle $\theta$ et observé au point $p$ s'exprime comme la sommation des contributions des champs scalaires, $U_i(p, t)$, de chaque élément i avec le retard appliqué sur chaque élément :

$$U(p, t, \theta) = \sum_{i=1}^{N} U_i\big(p, t - \tau_i(\theta)\big) \#(2.6)$$

Ici, $\tau_i(\theta)$ est le retard appliqué à l'élément $i$. Cette projection décrit la propagation de l'onde plane se propageant avec un angle d'incidence $\theta$ vers le point $p$.

A l'étape 602, on calcule le signal élémentaire reçu par l'élément j avec une émission par une onde plane avec l'angle d'incidence $\theta_m$ en présence d'un diffracteur supposé ponctuel en un point $p$ de la pièce au moyen de l'approximation suivante :

$$\hat{s}_{mj}(p, t) = U(p, t, \theta_m) * U_j(p, t) \#(2.7)$$

où $U(p, t, \theta_m)$ est défini par la relation (2.6) et $U_j(p, t)$ est défini par la relation (2.5).

Les estimées des champs ultrasonores $U_i(p, t)$ et $U(p, t, \theta_m)$ peuvent être calculées au moyen d'un logiciel de simulation de propagation d'ondes élastodynamiques, par exemple le logiciel CIVA, décrit dans la publication [5].

A l'étape 603 enfin, on calcule la cartographie de correction via la relation suivante :

$$C(p) = \sum_{m=1}^{M} \sum_{j=1}^{N} \hat{s}_{mj}\left(p, t_m^e(p) + t_j^r(p)\right) \#(2.8)$$

où $t_m^e(p)$ est le temps mis par la $m^e$ onde plane avec l'angle d'incidence $\theta_m$ pour atteindre le point de focalisation $p$, $t_j^r(p)$ est le temps de vol entre le point de focalisation p et le récepteur $j$.

On décrit à présent un troisième mode de réalisation de l'invention qui s'applique à une méthode d'imagerie ultrasonore dite conventionnelle basée sur un balayage angulaire de la zone à imager par des ondes planes.

Le principe d'une inspection par balayage angulaire consiste à appliquer successivement différentes lois de retard correspondantes à différents angles de sorte à insonifier un secteur angulaire de la pièce. Il fournit une image sectorielle de la zone inspectée, communément appelée S-Scan. La configuration d'inspection est présentée sur la figure 8 pour un exemple de pièce 803 comprenant plusieurs réflecteurs identiques. Le transducteur 801 est positionné sur un sabot 802 qui vient au contact de la pièce 803. Sur l'imagerie S-Scan 804 issue d'un balayage angulaire entre 43° et 79° avec un pas angulaire de 1°, on observe que les réponses en amplitude des réflecteurs de dimensions identiques décroivent en fonction de leur distance au traducteur.

La méthode de calibration selon le troisième mode de réalisation de l'invention vise à corriger directement les signaux acquis par le transducteur pour chaque angle d'incidence.

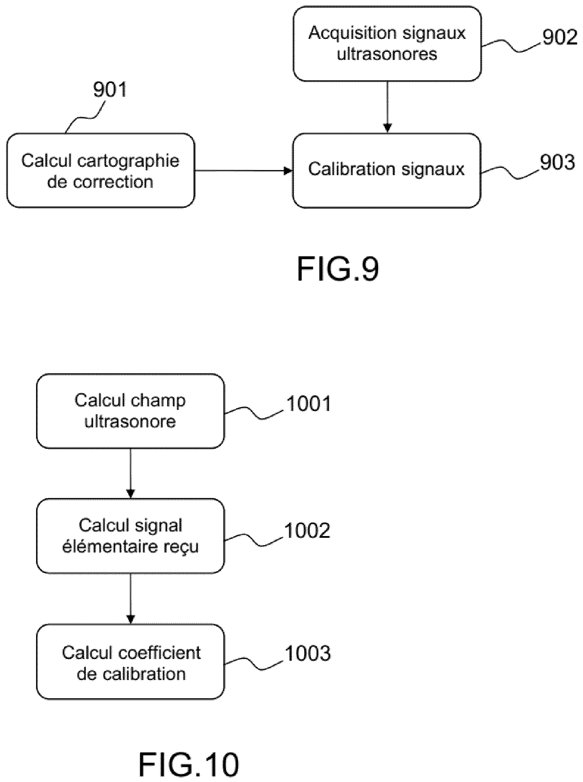

La figure 9 représente, sur un organigramme, les étapes de mise en oeuvre d'une méthode d'imagerie par balayage angulaire selon le troisième mode de réalisation de l'invention.

A l'étape 902, on réalise une acquisition de signaux pour chaque angle d'incidence. Pour cela, une étape préalable consiste, comme pour le cas de l'imagerie PWI, à calculer des lois de retard à appliquer aux éléments du transducteur afin d'émettre une onde plane dans la direction souhaitée.

Les lois de retard sont appliquées à l'émission et à la réception aux éléments du transducteur. Pour un transducteur à N éléments et un angle d'incidence $\theta_m$, le retard appliqué à l'émission et à la réception à un élément s'écrit:

$$\tau_i(\theta_m) = \tau_{im}, \qquad i = 1, \dots, N, \ m = 1, \dots, M \#(3.1)$$

où M est le nombre d'ondes planes transmises et reçues par le transducteur. Le retard $\tau_i(\theta)$, $i = 1, \dots, N$ est calculé par la formule (2.3).

A l'étape 903, les signaux acquis sont corrigés via un facteur de calibration propre à chaque direction angulaire, ce facteur de calibration étant précalculé à l'étape 901.

$$s_{corr}(\theta_m, t_i) = \frac{s(\theta_m, t_i)}{c(\theta_m)} \#(3.2)$$

L'ensemble des signaux acquis peut être représenté sous la forme d'une image S-SCAN qui donne l'amplitude du signal en fonction du temps et de l'angle d'incidence.

La figure 10 illustre, sur un organigramme, les étapes de mise en oeuvre de la méthode de calcul des facteurs de calibration selon le troisième mode de réalisation de l'invention.

A l'étape 1001, on détermine le champ ultrasonore transmis pour un angle d'incidence $\theta$ et observé en un point p le long d'un rayon représentatif de la propagation de l'onde avec cet angle d'incidence.

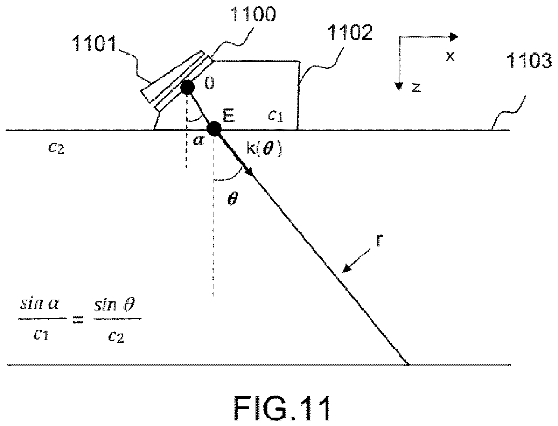

La figure 11 schématise un rayon r représentatif de la propagation de l'onde émise avec un angle d'incidence $\theta$ par un transducteur 110 disposé sur un sabot 1102 en contact avec une pièce à inspecter 1103. Des lois de retard 1101 sont appliquées aux éléments du transducteur 1100 pour générer une onde plane d'angle d'incidence $\theta$.

Le rayon r, est défini par son origine E qui est le point impact de l'onde émise sur l'interface séparant les éléments du traducteur et la zone à inspecter et la direction de propagation $\mathbf{k}(\theta) = (\sin\theta, \cos\theta)$ comme illustré sur la figure 11. Le rayon r est issu du centre du traducteur (point O), réfracté dans la pièce avec l'angle de réfraction $\theta$ et respect de la loi de Snell-Descartes sur l'interface.

Le champ $U(p, t, \theta)$ défini par la formule (2.6) est calculé pour tous les points p du rayon r. Il peut être calculé au moyen d'un logiciel de simulation de propagation d'ondes élastodynamiques, par exemple le logiciel CIVA, décrit dans la publication [5].

Les coordonnées du point $p = (p_1, p_2)$ sont définies par l'équation :

$$p_1 - e_1 = \tan\theta \, (p_2 - e_2) \#(3.2)$$

où $(e_1, e_2)$ sont les coordonnées du point d'impact E.

A l'étape 1002, on détermine le signal élémentaire reçu par le transducteur avec une émission par une onde plane d'incidence $\theta$ en présence d'un diffracteur supposé ponctuel en un point p de la pièce, ledit point p parcourant le rayon r via la relation suivante :

$\hat{s}(t_a(p) + t_r(p), \theta) = U(p, t = t_a(p), \theta) * U(p, t = t_r(p), \theta)$, où $t_a(p)$ est le temps mis par l'onde plane avec l'angle d'incidence $\theta$ pour atteindre le point p et $t_r(p)$ le temps mis par l'onde plane en provenance du point p pour atteindre le transducteur.

Le signal élémentaire $\hat{s}(t_a(p) + t_r(p), \theta)$ correspond à un trajet aller-retour entre le transducteur et le point p.

A l'étape 1003, on détermine le coefficient de correction du signal acquis pour l'incidence $\theta$, comme $C(\theta_m) = \hat{s}(t_i, \theta_m)$ avec $t_i$ variant sur les instants de mesure,

$$t_i = t_a(p) + t_r(p).$$

Dans le cas où la configuration est symétrique, on a $t_a(p) = t_r(p)$.

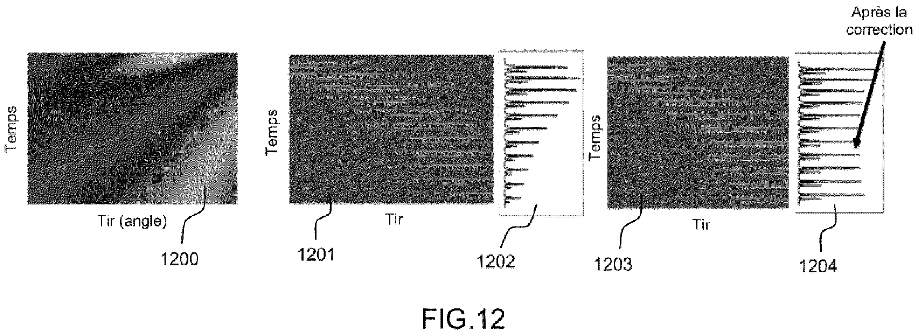

La figure 12 illustre, sur un exemple, le résultat obtenu via cette méthode de calibration pour une pièce comprenant plusieurs réflecteurs de mêmes dimensions disposés à différentes profondeurs.

Les diagrammes 1200,1201,1203 montrent une amplitude en fonction du temps et d'un angle d'incidence.

Le diagramme 1200 montre une cartographie du gain de calibration déterminé par la méthode de la figure 10.

Le diagramme 1201 montre une cartographie S-SCAN d'une acquisition de signaux ultrasonores sans correction. Le diagramme 1202 montre les amplitudes des signaux correspondant aux réflecteurs de la pièce. On voit que l'amplitude varie selon la profondeur (équivalente au temps).

Le diagramme 1203 montre la cartographie 1201 corrigée par le gain de calibration 1200. Le diagramme 1204 montre les mêmes amplitudes que le diagramme 1202 mais après correction par le gain de calibration. On peut voir que la calibration permet d'ajuster l'amplitude des signaux au même niveau pour tous les réflecteurs quelle que soit leur profondeur dans la pièce.

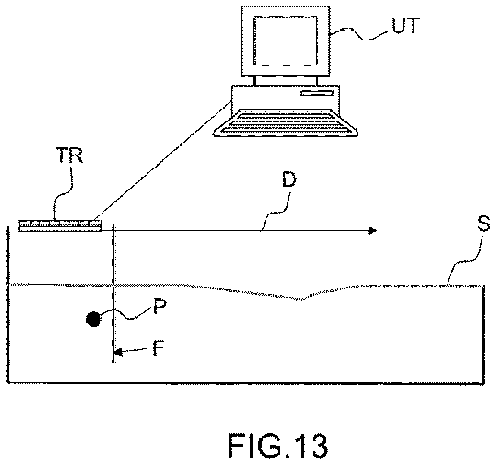

La figure 13 représente un schéma d'un système d'inspection ultrasonore configuré pour mettre en oeuvre l'invention.

Le système comprend principalement un transducteur ultrasonore multi-éléments TR et une unité de traitement UT. Le transducteur TR peut présenter différentes géométries de découpage, par exemple il peut s'agir d'un capteur linéaire, matriciel, annulaire ou sectoriel. Chaque élément du transducteur ultrasonore peut être réalisé au moyen d'un capteur piézo-électrique ou tout autre type de capteur apte à émettre et recevoir une onde ultrasonore.

Le transducteur TR est piloté par l'unité de traitement UT pour imager une zone F d'une structure S à inspecter. Pour cela, le transducteur TR peut réaliser plusieurs acquisitions en se déplaçant sur la surface de la pièce, par exemple le long d'une direction de déplacement D. Le système d'inspection permet d'imager la structure S en tout point P.

La méthode de génération de coefficients de calibration ou d'une cartographie de correction selon l'un quelconque des modes de réalisation de l'invention peut être mise en oeuvre par l'unité de traitement UT. A cet effet, elle peut être exécutée en tant que programme d'ordinateur. Plus généralement, cette méthode peut être mise en oeuvre au moyen d'éléments logiciels et/ou matériels tels qu'un processeur et une mémoire.

La méthode d'imagerie, intégrant la calibration des signaux acquis par le transducteur TR peut être mise en oeuvre au moyen du transducteur TR et de l'unité de traitement UT. Typiquement, les coefficients de calibration précalculés sont sauvegardés par l'unité de traitement UT qui comporte une mémoire ou base de données et sont utilisés pour corriger les signaux acquis par le transducteur TR ou pour corriger l'image construite par l'unité de traitement UT à partir des signaux acquis par le transducteur TR.

Références

[1] C. Holmes, B.W. Drinkwater, P.D. Wilcox, Post-processing of the full matrix of ultrasonic transmit-receive array data for non-destructive evaluation, NDT&E international, Vol. 38, pp. 701-711, 2005.

[2] El Amrani, M., Calmon, P., Roy, O., Royer, D., & Casula, O. (1995). The ultrasonic field of focused transducers through a liquid-solid interface. In Review of Progress in Quantitative Nondestructive Evaluation: Volume 14 (pp. 1075-1082). Boston, MA: Springer US.

[3] Lingvall, F. (2004). A method of improving overall resolution in ultrasonic array imaging using spatio-temporal deconvolution. Ultrasonics, 42(1-9), 961-968.

[4] Le Jeune, L., Robert, S., Villaverde, E. L., & Prada, C. (2016). Plane wave imaging for ultrasonic non-destructive testing: Generalization to multimodal imaging. Ultrasonics, 64, 128-138.

[5] « CIVA: An expertise platform for simulation and processing NDT data », Ultrasonics volume 44 Supplement, 22 December 2006, Pages e975-e979, Proceedings 10 of Ultrasonics International (UI'05) and World Congress on Ultrasonics (WCU),

**Revendications**

1. Procédé, mis en oeuvre par ordinateur, de calibration de signaux ultrasonores acquis par un transducteur ultrasonore multi-éléments pour imager une zone d'intérêt, la méthode comprenant les étapes de :

   - Estimer (601,1001) un champ ultrasonore émis depuis le transducteur vers un point P quelconque de ladite zone,
   - Estimer (601,1001) un champ ultrasonore acquis par le transducteur en provenance dudit point P,
   - Déterminer (602,1002) un signal élémentaire reçu par le transducteur à partir du champ ultrasonore émis et du champ ultrasonore acquis,
   - Déterminer (603,1003) à partir dudit signal élémentaire, pour chaque point P de ladite zone, un coefficient de calibration à appliquer aux signaux reçus par un transducteur ultrasonore pour imager ladite zone ou à une image ultrasonore obtenue à partir desdits signaux reçus.

2. Procédé de calibration selon la revendication 1 comprenant en outre les étapes de :

   - Réaliser (502,503,902) une imagerie ultrasonore de la zone d'intérêt au moyen du transducteur ultrasonore,
   - Corriger (504,903) les signaux reçus par le transducteur ultrasonore ou l'image déterminée à partir desdits signaux au moyen des coefficients de calibration calculés.

3. Procédé de calibration selon l'une quelconque des revendications précédentes dans laquelle les étapes d'estimer (601,1001) un champ ultrasonore comprennent la projection du champ ultrasonore estimé sur un vecteur de polarisation de l'onde ultrasonore.

4. Procédé de calibration selon l'une quelconque des revendications précédentes dans laquelle :

   - Le signal élémentaire associé à un couple d'éléments (émetteur, récepteur) du transducteur est pris égal (602) au produit de convolution temporel entre le champ ultrasonore émis depuis l'élément émetteur vers le point P et le champ ultrasonore acquis par l'élément récepteur en provenance du point P,
   - Le coefficient de calibration (603) est pris égal à la somme, sur l'ensemble des éléments du transducteur, des valeurs du signal élémentaire prises à des instants égaux à la somme entre le temps de parcours d'une onde ultrasonore entre un élément émetteur du transducteur et le point P et le temps de parcours d'une onde ultrasonore entre le point P et un élément récepteur du transducteur,
   - Le coefficient de calibration étant appliqué (504) au pixel, correspondant au point P, d'une image ultrasonore obtenue via une méthode de focalisation totale.

5. Procédé de calibration selon l'une quelconque des revendications 1 à 3 dans laquelle le transducteur ultrasonore est apte à émettre une onde plane selon un angle d'incidence donné et le champ ultrasonore émis par le transducteur selon l'angle d'incidence vers le point P est pris égal (601) à la somme des valeurs des champs ultrasonores émis depuis un élément du transducteur vers le point P, prises à un instant retardé d'un retard prédéfini de sorte que le transducteur émette une onde plane avec ledit angle d'incidence.

6. Procédé de calibration selon la revendication 5 dans laquelle:

   - Le signal élémentaire associé à un couple (angle d'incidence, élément récepteur du transducteur) est pris égal (602) au produit de convolution temporel entre le champ ultrasonore émis par le transducteur selon l'angle d'incidence vers le point P et le champ ultrasonore acquis par l'élément récepteur en provenance du point P,
   - Le coefficient de calibration est pris égal (603) à la somme, sur une pluralité d'angles d'incidence et l'ensemble des éléments du transducteur, des valeurs du signal élémentaire prises à des instants égaux à la somme entre le temps de parcours d'une onde plane émise avec un angle d'incidence donné vers le point P et le temps de parcours d'une onde ultrasonore entre le point P et un élément récepteur du transducteur,
   - Le coefficient de calibration étant appliqué (504) au pixel, correspondant au point P, d'une image ultrasonore obtenue via une méthode d'imagerie ultrasonore par onde plane.

7. Procédé de calibration selon l'une quelconque des revendications précédentes dans laquelle l'image ultrasonore est une somme des signaux acquis par les éléments du transducteur pris aux temps de vol correspondants à un point P de la zone à imager.

**8.** Procédé de calibration selon la revendication 5 dans laquelle:

- Le signal élémentaire associé à un angle d'incidence est pris égal (1002) au produit de convolution temporel entre le champ ultrasonore émis par le transducteur selon l'angle d'incidence vers un point situé sur un rayon représentatif de la propagation de l'onde plane et le champ ultrasonore émis depuis ledit point vers le transducteur,
- Chaque signal ultrasonore acquis par le transducteur pour un angle d'incidence et un temps de vol donnés est corrigé (903) par le coefficient de calibration pris égal (1003) au signal élémentaire pris à un instant égal au temps de vol.

**9.** Procédé de calibration selon la revendication 8 dans laquelle l'image ultrasonore est définie par une représentation des signaux acquis en fonction de l'angle d'incidence et du temps de vol.

**10.** Dispositif d'imagerie ultrasonore comprenant un transducteur ultrasonore multi-éléments (TR) et une unité de traitement (UT) configurés pour mettre en oeuvre les étapes du procédé de calibration selon l'une quelconque des revendications précédentes.

**11.** Programme d'ordinateur comprenant des instructions qui conduisent le dispositif selon la revendication 10 à exécuter les étapes du procédé de calibration selon l'une quelconque des revendications 1 à 9, lorsque ledit programme est exécuté sur un ordinateur.

101 ⌇ Construction manuelle des courbes de correction → Acquisition de signaux ⌇ 102

Correction des signaux ⌇ 103

# FIG.1

101 ⌇ Construction manuelle des courbes de correction → Acquisition de signaux ⌇ 102

Calcul d'image (TFM, PWI,...) ⌇ 201

Correction d'image ⌇ 202

# FIG.2

FIG.3

EP 4 563 996 A1

Angle 46°          Angle 47°          Angle 48°

401          402          403

FIG.4a

EP 4 563 996 A1

Angle 60°　　　　　Angle 61°　　　　　Angle62°

TCG　　　　　TCG　　　　　TCG

406　　　　　405　　　　　404

FIG.4b

EP 4 563 996 A1

Acquisition signaux
ultrasonores ⟍502

Création image ⟍503

501⟋
Calcul cartographie
de correction → Calibration image ⟍504

# FIG.5

Calcul champ
ultrasonore ⟍601

Calcul signal
élémentaire reçu ⟍602

Calcul cartographie
de correction ⟍603

# FIG.6

FIG.7

FIG.8

18

Acquisition signaux ultrasonores — 902

Calcul cartographie de correction — 901

Calibration signaux — 903

## FIG.9

Calcul champ ultrasonore — 1001

Calcul signal élémentaire reçu — 1002

Calcul coefficient de calibration — 1003

## FIG.10

$$\frac{sin\ \alpha}{c_1} = \frac{sin\ \theta}{c_2}$$

FIG.11

FIG.12

FIG.13

Europäisches
Patentamt

European
Patent Office

Office européen
des brevets

**RAPPORT DE RECHERCHE EUROPEENNE**

Numéro de la demande

EP 24 21 2414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/284972 A1 (LEPAGE BENOIT [CA] ET AL) 5 octobre 2017 (2017-10-05) | 1-3,5,7, 9-11 | INV. G01N29/04 |
| Y | * le document en entier * | 4,6,8 | G01N29/06 G01N29/11 |
| X | Extende Civa: "AUTOMATIC AND FAST COMPUTATION OF TCG CALIBRATION CURVES FOR INSPECTION CONFIGURATION WITH SINGLE AND MULTI-ELEMENTS PROBES (MARCH 2021)", , 1 mars 2021 (2021-03-01), XP093180717, Extrait de l'Internet: URL:https://www.extende.com/civa-tips [extrait le 2024-07-01] * le document en entier * | 1,2,9-11 | G01N29/26 G01N29/30 G01S7/52 |
| Y | Jothilakshmi N ET AL: "SIMULATION STUDY FOR ULTRASONIC PHASED ARRAY EXAMINATION OF ZIRCONIUM ALLOY BILLETS & INGOTS", Proceedings of the National Seminar & Exhibition on Non-Destructive Evaluation, 8 décembre 2011 (2011-12-08), 1 juillet 2024 (2024-07-01), pages 409-4013, XP093181076, Extrait de l'Internet: URL:https://www.ndt.net/article/nde-india2 011/pdf/3-28A-4.pdf [extrait le 2024-07-01] * le document en entier * | 4,6,8 | |

**DOMAINES TECHNIQUES RECHERCHES (IPC)**

G01N
G01S

Le présent rapport a été établi pour toutes les revendications

| Lieu de la recherche | Date d'achèvement de la recherche | Examinateur |
|---|---|---|
| Munich | 11 avril 2025 | Roetsch, Patrice |

## ANNEXE AU RAPPORT DE RECHERCHE EUROPEENNE
## RELATIF A LA DEMANDE DE BREVET EUROPEEN NO.

EP 24 21 2414

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2025

| Document brevet cité au rapport de recherche | Date de publication | Membre(s) de la famille de brevet(s) | Date de publication |
|---|---|---|---|
| US 2017284972 A1 | 05-10-2017 | AUCUN | |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. HOLMES** ; **B.W. DRINKWATER** ; **P.D. WILCOX**. Post-processing of the full matrix of ultrasonic transmit-receive array data for non-destructive evaluation. *NDT&E international*, 2005, vol. 38, 701-711
- The ultrasonic field of focused transducers through a liquid-solid interface. **EL AMRANI, M.** ; **CALMON, P.** ; **ROY, O.** ; **ROYER, D.** ; **CASULA, O.** Review of Progress in Quantitative Nondestructive Evaluation. Springer, 1995, vol. 14, 1075-1082
- **LINGVALL, F.** A method of improving overall resolution in ultrasonic array imaging using spatio-temporal deconvolution. *Ultrasonics*, 2004, vol. 42 (1-9), 961-968
- **LE JEUNE, L.** ; **ROBERT, S.** ; **VILLAVERDE, E. L.** ; **PRADA, C.** Plane wave imaging for ultrasonic non-destructive testing: Generalization to multimodal imaging. *Ultrasonics*, 2016, vol. 64, 128-138
- CIVA: An expertise platform for simulation and processing NDT data. *Ultrasonics*, December 2006, vol. 44 (22), e975-e979